# EUROPEAN PATENT SPECIFICATION

(11) **EP 2 614 699 B1**
(45) Date of publication and mention of the grant of the patent: **15.07.2020**
(21) Application number: 11823104.2
(22) Date of filing: 15.06.2011
(51) Int. Cl.: A01G 17/02

(54) **DEVICE FOR THINNING AND HARVESTING FLOWERS**
VORRICHTUNG ZUM AUSDÜNNEN UND ERNTEN VON BLUMEN
DISPOSITIF POUR L'ÉCLAIRCISSAGE ET LA CUEILLETTE DE FLEURS

(30) Priority: 10.09.2010 ES 201030922 U
(43) Date of publication of application: 17.07.2013
(73) Proprietor: Sagarra Dolset, Juan Antonio, 22520 Huesca (ES); Sagarra Dolset, Jose Maria, 22520 Huesca (ES)
(72) Inventor: Sagarra Dolset, Juan Antonio, 22520 Huesca (ES); Sagarra Dolset, Jose Maria, 22520 Huesca (ES)
(74) Representative: Isern Patentes y Marcas S.L.
(86) International application number: PCT/ES2011/070429
(87) International publication number: WO 2012/032199

(56) References cited:
- EP-A1- 1 649 740
- EP-A1- 1 842 416
- WO-A2-2009/030479
- ES-A6- 2 081 268
- ES-T3- 2 176 158
- ES-T3- 2 309 670
- ES-U- 1 069 420
- FR-A- 677 887
- FR-A- 1 379 506
- FR-A2- 2 372 585
- US-A- 5 372 002

## Description

### OBJECT OF THE INVENTION

The object of the invention herein is an apparatus that can work well as a flower thinner for reducing the number of flowers on a tree and whose performance is substantially more economical and efficient than current thinning devices.

### BACKGROUND OF THE INVENTION

A system is currently known in agriculture that supports the growth of self-fertile varieties of trees with large volumes of fruit load, which consists of stripping a certain percentage of their flowers. By using this procedure, more energy can be directed to feed the remaining flowers, such that the fruit will develop further by having reduced the competition with the other flowers. Furthermore, this prior flower thinning phase decreases the amount of work in the subsequent fruit thinning phase.

There are known apparatus called flower thinning apparatus to carry out this phase of flower thinning and harvesting fruit from trees or berries from bushes, as for example disclosed in document ES 2081268. A known thinning device is an apparatus formed by an electric battery connected to an electric motor which spins an elongated shaft provided with a plurality of filaments or threads. By spinning the shaft at a certain speed next to a branch laden with flowers or fruit, the threads hit the flowers or fruit and strip them off. A main drawback of this known thinning device is that the threads used are extremely tough and have low ductility, which produces wounds to the mixed buds and spurs, especially in vegetative buds which later form shoots or leaves. Furthermore, the known thinning apparatus is more than one metre long, enabling the user to reach high branches on the trees. This length means vibrations transmitted to the arms cause fatigue, when further taking into account its considerable weight (approximately 3 kg for the battery and 2 kg for the rest of the apparatus), resulting in decreased user performance as the hours elapse. Finally, the ties attached to the shaft mean they cannot be changed quickly, thereby producing substantial lost time each time a thread needs to be changed due to breakage.

### DESCRIPTION OF THE INVENTION

The invention herein resolves the problems described by using a novel device for thinning and harvesting flowers designed to extract 60% or more of the flowers without damaging the branches, wood buds or shoots. This has been achieved through a comprehensive study of different types of threads, cords and filaments, as well as different arrangements thereof along the shaft. The thinning and harvesting device of the invention can be used during the different phases, from the developed flower bud, flowers and flowers with leaf shoots up to 3 cm without damaging them. In addition, another important advantage of the invention is that the flowers that are not stripped are distributed along the entire branch, which is very important.

Thus, the invention relates to a device for thinning and harvesting flowers which includes an activation means configured to spin a shaft and preferably made of calibrated steel, to which a plurality of filaments are attached, which, according to the results of the study carried out, are a number of braided cords that are approximately 3 mm thick and approximately 8 cm long. Each braided cord is attached to the shaft by its central part, such that they are approximately 4 cm long on each side spinning along with the shaft to strip the flowers from the branches.

In respect of the arrangement of the braided cords, a first particular embodiment of the invention comprises 7 braided cords spaced 2 cm apart from each other, achieving suitable results for thinning the flower bud. A second particular embodiment, on the other hand, comprises 5 braided cords spaced 3 cm apart from each other, the results of which are suitable for thinning flowers. Additionally, the preferred length of the shaft is 25 cm, while the preferred thickness is 10 mm..

There is evidence that the effectiveness of a flower thinning/harvesting apparatus when in operation using braided cords of the type described, arranged according to one of these configurations, is superior to all existing machines, achieving more than 60% thinning. Furthermore, this novel thinning/harvesting apparatus prevents branches from being left without flowers when the same branch is inadvertently passed over a second time.

Additionally, each braided cord is preferably attached to the shaft by means of an orifice through which the braided cord passes, being immobilised by means of a set screw. In this manner, a braided cord can be changed more easily, being changed much faster when compared to current devices for thinning and harvesting. Furthermore, the set screw should be preferably threaded on both ends, enabling it to be removed even if one of the ends becomes damaged.

Furthermore, two types of activation means are contemplated for the shaft of the thinning and harvesting device of the invention: a pneumatic motor or an electric motor powered by a battery. The electric motor preferably has an output power of 50 watts with a speed control range from 2000 rpm to 5000 rpm. Thus, the speed of rotation of the shaft can be regulated depending on the type of flowers. For example, in the case of apricots, it will be necessary to operate at low speeds, while a higher speed is suitable for peaches.

In both cases, the shaft is coupled to the activation means by means of an encased part provided with an internal bearing which provides stability during rotation.

### BRIEF DESCRIPTION OF THE FIGURES

Figure 1 shows a device for thinning and harvesting flowers according to the prior art.
Figure 2 shows the shaft and braided cords of a device for thinning and harvesting flowers according to the invention herein.
Figure 3 shows a detailed view of how braided cords are attached to the shaft of the thinning and harvesting device of the invention.
Figure 4 shows an exploded view of a device for thinning and harvesting flowers according to the invention, wherein the shaft is connected to a pneumatic motor.
Figure 5 shows an exploded view of a device for thinning and harvesting flowers according to the invention, wherein the shaft is connected to an electric motor.

### PREFERRED EMBODIMENT OF THE INVENTION

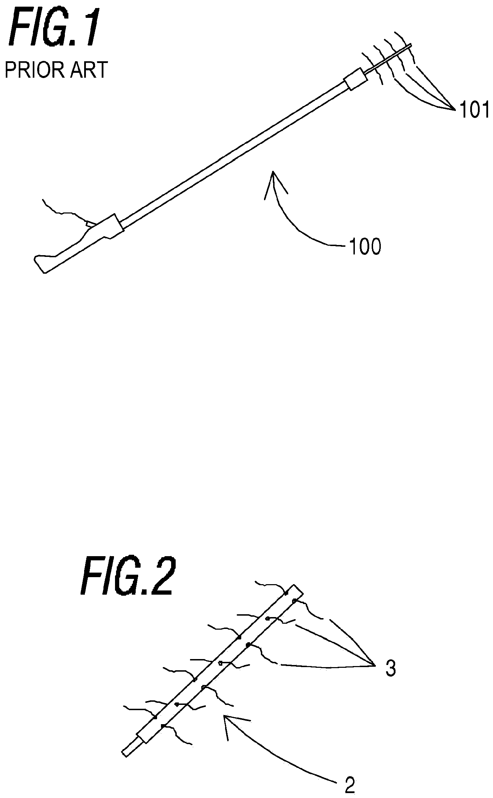

Described below is an example of the invention with reference to the accompanying figures. In particular, figure 1 shows an example of a thinning/harvesting apparatus (100) according to the prior art. As previously mentioned, the filaments (101) used in this thinning/harvesting apparatus (100) are too tough and hard, which produces wounds in the mixed shoots and spurs, especially in vegetative buds which subsequently form the shoots or leaves. Furthermore, although not shown in this figure, attaching the filaments to the shaft means they cannot be changed quickly, which causes lost time when any change is necessary. Another problem with this thinning/harvesting apparatus (100) is its high weight, about 2kg. (plus another 3kg. for the battery it connects to, and which is not shown in the figure), which causes the user to get tired quickly and reduces efficiency when working. Equally, its length of up to 1.80 metres amplifies the vibrations produced on the arms, exacerbating the problem of fatigue due to the weight.

Figure 2 shows the shaft (2) of a thinning/harvesting apparatus (1, 1') according to the invention herein, wherein its length is much less than that of the thinning/harvesting apparatus (100) in the prior art. Although not shown in the figure, each filament on the thinning/harvesting apparatus (1, 1') in this example is a braided cord (3) 3mm thick and 8cm long attached to the shaft (2) by means of set screws (6) threaded in a number of orifices (7) perpendicular to those through which the braided cords (3) pass. These braided cords (3) are much more flexible and lighter than the filaments (101) used in the thinning/harvesting apparatus (100) of the prior art, which enables 60% or more of the flowers to be stripped without damaging the branches or wood buds or shoots, and without the cords (3) getting entangled in the branches. Although not shown in the figures, two configurations are described for the location of the braided cords (3) and therefore also for the location of the shaft (2) orifices (7). A first configuration designed for thinning the flower bud comprises 7 orifices (7) spaced 2cm apart from each other, while a second configuration designed for thinning flowers comprises 5 orifices (7) spaced 3cm apart from each other.

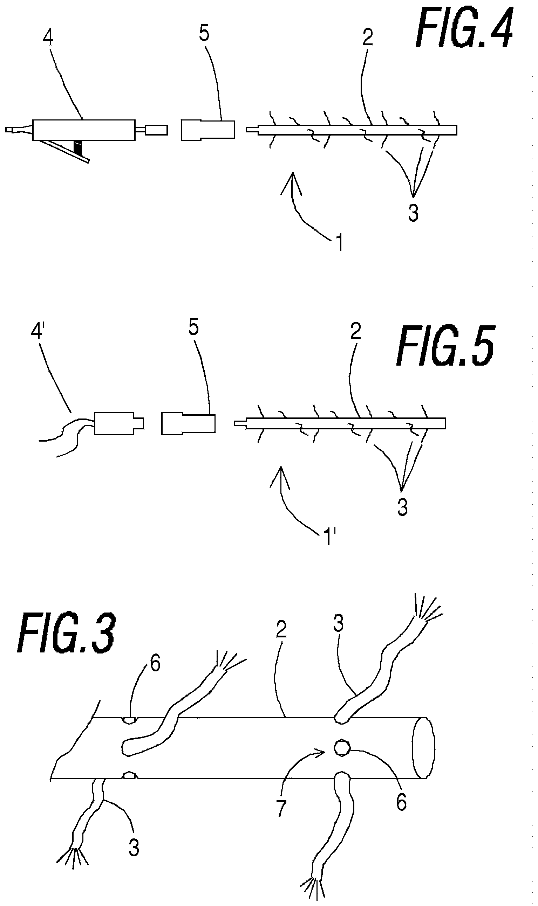

Finally, figures 4 and 5 show respective examples of activation means (4, 4') according to the invention. Figure 4 shows the use of a pneumatic motor (4) that connects to the shaft (2) of the invention via an encased part (5) provided with an internal bearing.

On the other hand, figure 5 shows an electric motor (4 ') connected to the shaft (2) of the invention via the aforementioned encased part. The electric motor (4 ') is a motor with no brushes or slip rings and having a constant speed control between 2000 rpm and 5000 rpm, 12 volts, 50 watts of power, and which operates at 1-4 amps. This electric motor (4') is connected to a control box (not shown) provided with a tie that can be attached to the user's belt, this control box, in turn, being connected to a battery that the user can carry as a backpack. In this example, the control box contains an electronic card, an on/off switch, a red light which indicates the on/off status and a current regulator.

This provides a thinning/harvesting apparatus (1, 1 ') about 425g in weight and 25cm long, making it very convenient for thinning flowers and reduces the manpower required per hectare. A thinning/harvesting apparatus (1, 1') according to the invention performs the work of three (3) operators working manually. Furthermore, the cost to the farmer is much less when compared to the thinning/harvesting apparatus (100) of the prior art.

## Claims

1. A device for thinning and harvesting (1,1 ') flowers comprising an activation means (4, 4') configured to spin a shaft (2) along which a plurality of filaments are attached (3), **characterised in that** the filaments are braided cords (3) approximately 3 mm thick and approximately 8 cm long, and comprising 7 braided cords (3) spaced 2 cm apart from each other, and the shaft (2) is approximately 25 cm long and 10 mm thick.

2. A device for thinning and harvesting (1,1') flowers according to claim 1, wherein each braided cord (3) is attached to the shaft (2) by means of an orifice (7) through which the braided cord (3) passes, being immobilised by means of a set screw (6).

3. A device for thinning and harvesting (1,1') flowers according to claim 2 wherein the set screw (6) can be threaded on both ends.

4. A device for thinning and harvesting (1,1') flowers according to any of the preceding claims, wherein the shaft (2) is made of calibrated steel.

5. A device for thinning and harvesting (1,1') flowers according to any of the preceding claims, wherein the activation means (4) is a pneumatic motor (4).

6. A device for thinning and harvesting (1,1') flowers according to any of the claims 1 to 4, wherein the activation means (4') is an electric motor (4') powered by a battery.

7. A device for thinning and harvesting (1, 1') flowers according to claim 6, wherein the electric motor (4') has an output power of 50 watts with a speed control range from 2000 rpm to 5000 rpm.

## Patentansprüche

1. Vorrichtung zum Ausdünnen und Ernten (1, 1') von Blumen, umfassend ein Aktivierungsmittel (4, 4'), das konfiguriert ist, um einen Schaft (2) zu drehen, entlang dem eine Vielzahl von Filamenten angebracht sind (3), **dadurch gekennzeichnet, dass** die Filamente geflochtene Schnüre (3) sind, die ungefähr 3 mm dick und ungefähr 8 cm lang sind, und umfassend 7 geflochtene Schnüre (3), die 2 cm voneinander beabstandet sind, und der Schaft (2) ungefähr 25 cm lang und 10 mm dick ist.

2. Vorrichtung zum Ausdünnen und Ernten (1, 1') von Blumen nach Anspruch 1, wobei jede geflochtene Schnur (3), die mittels einer Öffnung (7), durch die die geflochtene Schnur (3) verläuft, an der Welle (2) befestigt ist, mittels einer Stellschraube (6) immobilisiert ist.

3. Vorrichtung zum Ausdünnen und Ernten (1, 1') von Blumen nach Anspruch 2, wobei die Stellschraube (6) an beiden Enden mit einem Gewinde versehen sein kann.

4. Vorrichtung zum Ausdünnen und Ernten (1, 1') von Blumen nach einem der vorhergehenden Ansprüche, wobei der Schaft (2) aus kalibriertem Stahl gefertigt ist.

5. Vorrichtung zum Ausdünnen und Ernten (1, 1') von Blumen nach einem der vorhergehenden Ansprüche, wobei das Aktivierungsmittel (4) ein pneumatischer Motor (4) ist.

6. Vorrichtung zum Ausdünnen und Ernten (1, 1') von Blumen nach einem der Ansprüche 1 bis 4, wobei das Aktivierungsmittel (4) ein Elektromotor (4) ist, der von einer Batterie angetrieben wird.

7. Vorrichtung zum Ausdünnen und Ernten (1, 1') von Blumen nach Anspruch 6, wobei der Elektromotor (4') eine Ausgangsleistung von 50 Watt mit einem Drehzahlregelbereich von 2000 U/min bis 5000 U/min hat.

## Revendications

1. Dispositif pour l'éclaircissage et la récolte (1, 1') de fleurs comprenant des moyens d'activation (4, 4') configurés pour faire tourner un arbre (2) le long duquel une pluralité de filaments sont fixés (3), **caractérisé en ce que** les filaments sont des cordes tressées (3) d'environ 3 mm d'épaisseur et d'environ 8 cm de long, et comprenant 7 cordes tressées (3) espacées de 2 cm les unes des autres, et l'arbre (2) fait environ 25 cm de long et 10 mm d'épaisseur.

2. Dispositif pour l'éclaircissage et la récolte (1, 1') de fleurs selon la revendication 1, dans lequel chaque cordon tressé (3) est fixé à l'arbre (2) au moyen d'un orifice (7) à travers lequel passe le cordon tressé (3), étant immobilisé au moyen d'une vis de réglage (6).

3. Dispositif pour l'éclaircissage et la récolte (1, 1') de fleurs selon la revendication 2, dans lequel la vis de réglage (6) peut être filetée aux deux extrémités.

4. Dispositif pour l'éclaircissage et la récolte (1, 1') de fleurs selon l'une quelconque des revendications précédentes, dans lequel l'arbre (2) est en acier calibré.

5. Dispositif pour l'éclaircissage et la récolte (1, 1') de fleurs selon l'une quelconque des revendications précédentes, dans lequel les moyens d'activation (4) sont un moteur pneumatique (4).

6. Dispositif pour l'éclaircissage et la récolte (1, 1') de fleurs selon l'une quelconque des revendications 1 à 4, dans lequel les moyens d'activation (4') sont un moteur électrique (4') alimenté par une batterie.

7. Dispositif pour l'éclaircissage et la récolte (1, 1') de fleurs selon la revendication 6, dans lequel le moteur électrique (4') a une puissance de sortie de 50 watts avec une plage de contrôle de vitesse de 2000 tr/min à 5000 tr/min.
